# FASCICULE DE BREVET EUROPEEN

(11) **EP 3 707 042 B1**
(45) Date de publication et mention de la délivrance du brevet: **24.12.2025**
(21) Numéro de dépôt: 18875003.8
(22) Date de dépôt: 08.11.2018
(51) Int. Cl.: B60W 10/20, B60W 30/18, B60W 30/06, B62D 15/02

(54) **SYSTEME DE SECURISATION DU STATIONNEMENT D'UN VEHICULE AUTOMOBILE**
SYSTEM ZU SICHERUNG EINES GEPARKTEN FAHRZEUGS
SYSTEM FOR SECURING THE PARKING POSITION OF A MOTOR VEHICLE

(30) Priorité: 09.11.2017 FR 1760529
(43) Date de publication de la demande: 16.09.2020
(73) Titulaire: Astemo France, 93700 Drancy (FR)
(72) Inventeur: WITTE, Lennart, 67000 Strasbourg (FR); HURWIC, Aleksander, 75020 Paris (FR)
(74) Mandataire: Santarelli
(86) Numéro de dépôt international: PCT/FR2018/052770
(87) Numéro de publication internationale: WO 2019/092373

(56) Documents cités:
- DE-A1- 102012 103 059
- DE-A1- 102014 202 325
- JP-A- 2007 237 838
- JP-A- 2007 237 838
- US-A1- 2011 199 236
- US-A1- 2011 199 236
- US-A1- 2011 276 225
- US-A1- 2011 276 225
- US-A1- 2017 113 694
- US-A1- 2017 113 694

## Description

### DOMAINE TECHNIQUE ET ÉTAT DE LA TECHNIQUE ANTÉRIEURE

La présente invention se rapporte à un système de sécurisation de stationnement d'un véhicule, à un véhicule comportant un tel système de sécurisation et à un procédé de sécurisation du stationnement d'un véhicule.

Dans la plupart des véhicules automobiles actuels, la fonction de frein de parking ou de stationnement visant à immobiliser un véhicule à l'arrêt est assuré par des freins à disque ou des freins à tambour situés au niveau des roues arrières.

Il est courant d'équiper le train avant de freins à disque et le train arrière de freins à tambour. Dans cette configuration, la fonction frein de parking est réalisée par les freins à tambour.

L'application du freinage de parking est dans la majorité des cas obtenue en tirant sur un levier disposé dans l'habitacle qui est relié à un mécanisme situé dans le frein à tambour par l'intermédiaire d'un câble de frein. Le mécanisme tend à écarter les segments de freinage des freins à tambour pour les appliquer contre les tambours ou à appliquer des garnitures sur le disque.

L'application du freinage de parking peut également être effectuée automatiquement en mettant en œuvre un actionneur électrique au niveau de chaque frein des roues arrière. Par exemple en pressant un bouton situé sur le tableau de bord, l'actionneur provoque l'application des segments sur le tambour dans le cas de freins à tambour ou des garnitures des patins dans le cas de freins à disque.

Ces systèmes donnent satisfaction. Cependant on cherche à améliorer la sécurité à la fois du conducteur et des passagers et également des personnes pouvant se trouver autour du véhicule. Il pourrait résulter d'un serrage insuffisant ou une défaillance technique que la fonction frein de parking ne soit pas correctement assurée. Le serrage insuffisant pourrait résulter de l'application d'un effort insuffisant sur le levier pour appliquer correctement le frein de parking. Dans le cas des freins à disque, lorsque les freins ont été échauffés, lors de leur refroidissement, la force d'application des garnitures sur le disque diminue.

Ceci peut poser problème lorsque le véhicule est stationné sur une chaussée en pente. En cas de serrage insuffisant des freins ou de desserrage, le véhicule ne serait plus immobilisé et se déplacerait le long de la pente, avec un risque de heurter des personnes et/ou des véhicules. En outre si le conducteur et/ou les passagers sont restés dans le véhicule, ils pourraient également être blessés. Il n'est pas évident que le conducteur soit capable d'arrêter le véhicule, notamment du fait de l'effet de surprise et/ou de la panique ressenti.

Les documents JP 2007 237838 A, US 2011/199236 A1, US 2011/276225 A1 et US 2017/113694 A1 divulguent des systèmes de sécurisation d'un véhicule stationné mettant en place un braquage des roues directrices en direction d'un obstacle sûr (bordure de trottoir).

### EXPOSÉ DE L'INVENTION

C'est par conséquent un but de la présente invention d'offrir un système de sécurisation du stationnement d'un véhicule et un procédé de sécurisation du stationnement d'un véhicule, offrant un très haut niveau de sécurité dans de très nombreuses situations.

Le but de la présente invention est atteint par un système de sécurisation selon la revendication 1, un véhicule selon la revendication 10 et un procédé selon la revendication 11.

### BRÈVE DESCRIPTION DES DESSINS

La présente invention sera mieux comprise sur la base de la description qui va suivre et des dessins en annexe sur lesquels:
- la figure 1 est une représentation schématique d'une vue de côté d'un véhicule automobile stationné sur une zone de stationnement,
- la figure 2A est une représentation schématique d'une vue de dessus, du véhicule de la figure 1 dans une configuration non sécurisé,
- la figure 2B est une représentation schématique d'une vue de dessus, du véhicule de la figure 1 dans une configuration sécurisée grâce à l'invention,
- la figure 3 est un organigramme d'un exemple de mise en œuvre du système de sécurisation selon l'invention,
- la figure 4 est une représentation schématique d'une vue de dessus d'un véhicule automobile stationné dans une zone de stationnement selon un autre exemple,
- la figure 5 est un organigramme d'un autre exemple de mise en œuvre du système de sécurisation selon l'invention.

### EXPOSÉ DÉTAILLÉ DE MODES DE RÉALISATION PARTICULIERS

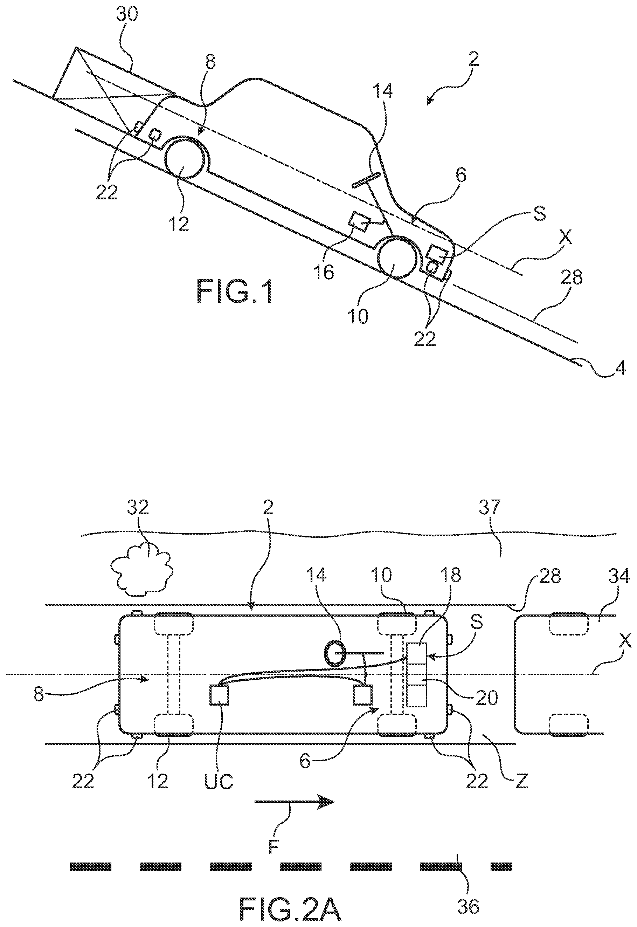

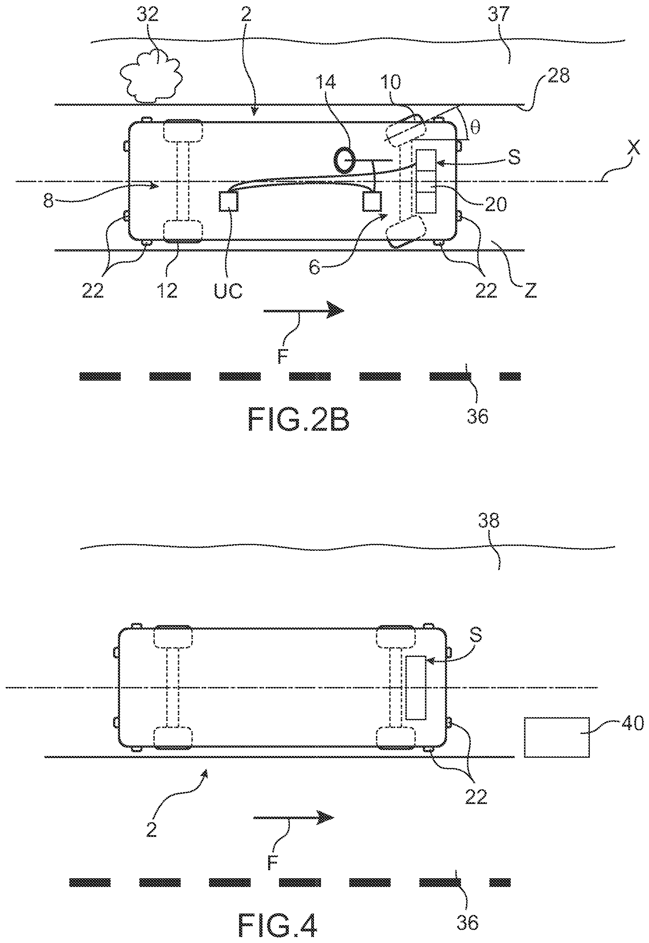

Sur les figures 1 et 2A, 2B, on peut voir des représentations schématiques d'une vue de côté et des vues de dessus respectivement, d'un véhicule automobile 2 stationné sur une chaussée en pente 4.

Dans cet exemple, le véhicule 2 comporte un essieu avant 6 et un essieu arrière 8. Chaque essieu avant et arrière comporte deux roues 10, 12 respectivement. Le véhicule s'étend selon un axe X.

Dans cet exemple, nous considérons que l'essieu avant 6 assure la direction du véhicule, i.e. qu'au moins l'orientation des roues de l'essieu avant sert à contrôler la direction du véhicule. Les roues de l'essieu 6 sont désignées « roues directrices ».

Les roues de l'essieu avant 6 peuvent être orientées par une action du conducteur sur un volant de direction 14, soit par un actionneur tel qu'un moteur électrique 16.

Le véhicule comporte des freins au niveau de chaque roue. Par exemple sur les roues de l'essieu avant il s'agit de freins à disque, et sur les roues de l'essieu arrière il s'agit de freins à tambour. Les freins peuvent être activés par l'action du conducteur sur une pédale de frein.

Le véhicule comporte un système de frein de parking. Le système de frein de parking comporte des moyens pour assurer le maintien du serrage des freins, au moins les freins de l'essieu arrière 8, de manière temporaire sans action sur la pédale de frein. La fonction frein de parking ou frein de stationnement peut être activée en tirant sur une levier de frein situé dans l'habitacle, ce qui exerce un traction sur un câble reliés aux freins équipant les roues arrière, soit en appuyant sur un bouton également situé dans l'habitacle qui provoque le serrage des freins arrières, soit au moyen de moteurs situés sur les freins, soit d'un moteur qui exerce un effort de traction sur un câble.

Le véhicule comporte également un système de sécurisation S du véhicule à l'état stationné. Le système de sécurisation comporte des moyens pour déterminer une configuration de l'environnement d'une zone de stationnement Z sur laquelle le véhicule est stationné.

Le système de sécurisation a pour objectif de maximiser la sécurité du stationnement du véhicule automobile.

Le système de sécurisation S comporte une unité de commande UC et des moyens 18 pour permettre de déterminer la pente de la zone Z et éventuellement la valeur de cette pente, par exemple un capteur de pente ou d'inclinaison. Avantageusement, les moyens 18 mettent en œuvre des capteurs et/ou dispositif utilisés par d'autres systèmes équipant communément les véhicules automobiles, typiquement un capteur de pente d'un système de contrôle de trajectoire, par exemple ESP^{®} (Electronic Stability Control en terminologie anglo-saxonne) et/ou une caméra du régulateur de vitesse adaptatif.

Le système de sécurisation comporte également des moyens de détermination de l'orientation des roues directrices par rapport à l'axe du véhicule, des moyens 20 pour permettre de cartographier de la zone Z. Le système de sécurisation S comporte également avantageusement des moyens pour déterminer l'orientation du véhicule par rapport à cette pente, i.e. si l'avant du véhicule est en aval ou en amont de la pente.

On cherche avec les moyens 20 à détecter le ou les élément(s) formant l'environnement du véhicule.

Certains de ces éléments sont susceptible(s) de former un obstacle pour le véhicule et contre lesquels il est susceptible de venir en contact pour être immobiliser, dans le cas où la fonction frein de parking assuré par l'action des freins serait insuffisante.

Par exemple, les moyens 20 comportent des capteurs 22 aptes à détecter et/ou visualiser les éléments composants la zone Z et qui entourent le véhicule. Par exemple, les capteurs comportent un ou des radars à ondes électromagnétiques, un ou des sonars mettant en œuvres des ultrasons, une ou des caméras.

Ces capteurs 22 peuvent déjà équiper le véhicule, par exemple pour réaliser les fonctions de radar de recul ou caméra de recul et servant, par exemple pour l'assistance au stationnement, à la régulation de vitesse ou analogue.

Le système de sécurisation de parking utilise tout ou partie des capteurs existants. En variante, il comporte certains capteurs dédiés et utilise des capteurs mis en œuvre pour d'autres fonctions.

Ce partage des capteurs est applicable car l'assistance au stationnement est généralement utilisée préalablement à l'utilisation du système de sécurisation.

Les éléments cartographiés de l'environnement peuvent être, de manière non exhaustive, une ou des bordures de trottoir 28, une ou des barrières 30, un ou des arbres 32, un ou des lampadaires, un ou des panneaux de signalisation, un ou des véhicules 34 stationnés aux alentours, la voie de circulation automobile 36, une voie de non circulation automobile 37...

Les signaux mesurés par les différents capteurs sont transmis à l'unité de commande qui comporte un calculateur apte à traiter ces signaux et établir une « image » de la zone.

Par exemple, les radar ou sonars détectent la présence d'obstacle et leur distance par rapport au véhicule. La ou les caméras acquièrent des images de ces obstacles. Un logiciel de reconnaissance de forme est avantageusement mis en œuvre pour déterminer de quel objet il s'agit. Par exemple, l'unité de commande comporte une base de données des formes des objets les plus susceptibles de se trouver dans ou autour d'une chaussée. Avantageusement, la reconnaissance de forme utilise une logique floue.

L'unité de commande comporte avantageusement plusieurs bases de données, chacune associée à un type d'environnement. Par exemple, à partir des données sur la position du véhicule déterminées au moyen des coordonnées de système de positionnement global ou coordonnées GPS (Global Positioning System en terminologie anglo-saxonne) du système de navigation équipant le véhicule, l'unité de commande peut déterminer si le véhicule est stationné dans une zone urbaine ou rurale, et par exemple dans le cas d'une zone rurale, s'il s'agit d'une zone avec peu de relief ou une zone de montagne. De manière très avantageuse, l'unité de commande pourrait également avoir accès à des bases de données accessibles sur le réseau internet, type « Google Maps^{®} » ou autre, pour corréler ses propres conclusions à des photographies de la zone réalisées par ailleurs.

L'unité de commande comporte avantageusement une base de données répertoriant les lois locales s'appliquant au stationnement, qui imposent une orientation des roues lorsqu'un véhicule est stationné, ceci est par exemple le cas au Canada et dans certains Etats des Etats-Unis d'Amérique.

Par ailleurs, l'unité de commande est capable de déterminer quels éléments formant l'environnement est susceptible de former un point d'appui ou obstacle capable d'arrêter le véhicule. Par exemple, plusieurs conditions peuvent être entrées dans le calculateur pour trier les éléments.

A titre d'exemple non limitatif et non exhaustif, les conditions peuvent être :
- La taille de l'élément, par exemple un arbre trop chétif ou un conteneur à poubelle qui n'est pas fixé au sol, serait exclu des obstacles potentiels.
- La distance à laquelle l'élément se trouve du véhicule.
- La pérennité de l'élément : par exemple s'il s'agit d'un véhicule stationné, le calculateur peut exclure cet élément comme obstacle potentiel car le véhicule est fortement susceptible d'être déplacé, et donc de ne pas former un obstacle pérenne.

En outre, après avoir identifié un ou plusieurs obstacles potentiels, le calculateur peut faire un ou plusieurs tris pour départager les obstacles. Par exemple il peut choisir celui ou ceux qui offrent le plus de sécurité pour arrêter le véhicule, par exemple une bordure de trottoir pourra être préférée à une barrière de sécurité.

Le calculateur peut également appliquer des filtres à des obstacles offrant un niveau de sécurité équivalent, tenant compte des risques d'endommagement du véhicule, par exemple en tenant compte de la ou des parties du véhicule susceptibles de venir en contact avec l'élément formant obstacle. Par exemple, le calculateur pourra préférer un bordure de trottoir formant une butée pour les pneumatiques à une ou plusieurs plots formant une butée pour le parechoc et susceptibles de l'emboutir.

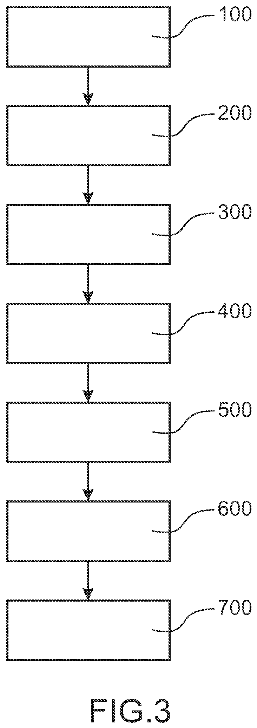

Un exemple de mise en œuvre du système de sécurisation selon l'invention va maintenant être expliqué à l'aide de l'organigramme de la figure 3.

Le conducteur a stationné son véhicule sur la zone Z, par exemple en utilisant l'assistance au stationnement. Par exemple, la zone Z est en pente.

Lors d'une première étape 100, le conducteur ou le véhicule active la fonction frein de parking, en tirant le levier de frein ou en appuyant sur un bouton ou en actionnant tout autre moyen. Au moins les freins des roues de l'essieu arrière sont serrés assurant une immobilisation du véhicule. Les roues directrices sont typiquement parallèles à l'axe X (figure 2A).

A l'étape 200, l'unité de commande UC détecte l'activation de la fonction de frein de parking, par exemple au moyen d'un capteur sur le levier de frein et déclenche alors le processus de détermination de l'environnement. L'unité de commande « sait » que le véhicule est stationné de manière prolongée. L'unité de commande UC peut également ou alternativement détecter si le contact a été coupé et/ou si les portes ont été verrouillées et/ou si le conducteur n'est plus sur son siège au moyen des capteurs de présence équipant généralement au moins le siège conducteur.

Lors d'une étape 300, de préférence elle détermine si la zone Z est en pente et éventuellement la valeur de la pente de la zone Z au moyen d'un capteur de pente ou inclinomètre et avantageusement l'orientation du véhicule par rapport à la pente. Par exemple, si l'axe du véhicule est aligné avec la pente elle détermine si, en cas de relâchement de freins, le véhicule va reculer ou avancer. L'unité de commande a ainsi avantageusement déterminé de quel côté du véhicule des éléments susceptibles de former un obstacle au véhicule sont à détecter. La détermination de la pente a lieu lorsque le véhicule est arrêté ou avant qu'il s'arrête.

Lors d'une étape 400, l'unité de commande active les différents moyens énoncés ci-dessus, tels que le ou les radars, le ou les sonars, le ou les caméras de recul afin de recueillir des informations sur les éléments composants la zone. De préférence, ce sont uniquement les moyens situés sur le véhicule du côté où un obstacle est recherché, i.e. du côté aval du véhicule. En sélectionnant ainsi les capteurs, la consommation électrique pour cette étape est réduite. En variante, l'acquisition s'effectue lors du stationnement du véhicule.

Lors d'une étape 500, les données acquises par les différents moyens d'acquisition sont transmises au calculateur qui traite des données et les met en relation pour déterminer la nature des éléments et leur emplacement par rapport au véhicule et ainsi obtenir une connaissance de l'environnement du véhicule.

Lors d'une étape 600, le calculateur sélectionne le ou les éventuels éléments capables de former un obstacle pour le véhicule. Pour cela il peut appliquer un ou plusieurs filtres Fi, tels que décrits ci-dessus, par exemple en appliquant des conditions de proximité, de solidité, de dangerosité... A la fin de cette étape, un élément est identifié comme capable de former un obstacle sûr pour le véhicule si les freins venaient à se desserrer ou si l'effort de freinage était insuffisant. La valeur de la pente et le type de véhicule, par exemple sa masse, peuvent être pris en compte pour la sélection de l'élément.

Peuvent être considérés comme des obstacles sûrs, par exemple un poteau, un trottoir suffisamment haut. Ne sont pas considérés comme pouvant former des obstacles sûrs, par exemple un marquage sur le sol, une ombre, un buisson, une personne située autour de la zone de stationnement, un obstacle mobile tel qu'une barrière mobile ou une voiture. Il sera cependant expliqué par exemple une véhicule peut être considéré comme un obstacle acceptable à condition de vérifier ultérieurement sa présence.

Lors d'une étape 700, l'unité de commande envoie une instruction à un actionneur électrique d'orienter les roues directrices, par exemple en tournant le volant, de sorte que, si les freins sont relâchés, la course du véhicule est telle que le véhicule se dirige vers l'élément désigne comme obstacle. Ainsi, en cas d'action insuffisante des freins, le véhicule est arrêté rapidement et la sécurité de ses éventuels occupants et/ou de toute personne autour du véhicule, par exemple des piétons et des automobilistes est assurée.

Par exemple, si l'élément choisi comme obstacle est une bordure de trottoir longeant le côté gauche du véhicule en regardant vers l'avant du véhicule, les roues directrices sont tournées d'un certain angle θ dans le sens antihoraire (figure 2B).

Si l'élément choisi comme obstacle est un mur situé en aval du véhicule, les roues directrices ne sont pas tournées.

Les étapes 300 et 400 peuvent être interverties. En réalisant l'étape 300 avant l'étape 400 l'unité de commande peut décider de ne pas exécuter les autres étapes si le véhicule est sur de plat ou sur une zone de pente très faible. En outre, en déterminant l'orientation du véhicule par rapport à la pente, la quantité de données à acquérir et à traiter peut être réduite.

Les étapes 500 et 600 peuvent être réalisées simultanément ou successivement. Par exemple, à chaque identification d'un élément le calculateur classe celui-ci soit comme obstacle potentiel, soit comme élément non capable de former un obstacle. Selon un autre exemple, le calculateur identifie tous les éléments : bordure de trottoir, arbres, plots...et ensuite trie les éléments suivant qu'ils sont ou non capables de former un obstacle.

Dans l'exemple décrit ci-dessus, les roues directrices du véhicule sont orientées de sorte que le véhicule prenne appui sur un obstacle et soit arrêté.

Si aucun élément capable de former un obstacle sûr n'est détecté, l'unité de commande envoie une instruction d'orienter les roues directrices vers l'extérieur de la zone de circulation, ainsi si le niveau de serrage est insuffisant le véhicule n'ira pas sur la voie de circulation automobile. Dans un autre exemple, même si un élément capable de former un obstacle sûr est détecté, l'unité de commande peut décider d'envoyer une instruction d'orienter les roues directrices vers l'extérieur de la zone de circulation, car elle estime que cette configuration est la plus sûre.

Alternativement, si aucun élément capable de former un obstacle sûr n'est détecté, il peut être décidé qu'un véhicule en stationnement formera l'éventuel obstacle. Dans ce cas il peut être prévu de vérifier périodiquement la présence du véhicule. Si celui-ci n'est plus stationné ou si le véhicule le remplaçant présente un trop petit gabarit, l'unité de commande peut décider de choisir un autre obstacle potentiel.

Sur la figure 4, on peut voir une autre configuration de la zone Z où est stationné le véhicule. La flèche F indique le sens de la pente.

La voie de circulation automobile 36 est située à droite du véhicule dans le sens de la pente, la partie 38 à gauche du véhicule est une voie piétonne sans trottoir et dans le même plan que la voie de circulation automobile. A l'avant gauche du véhicule dans le sens de la pente se trouve une bordure centrale 40. Dans cette configuration, l'unité de commande peut décider d'orienter les roues directrices en direction de la bordure centrale 40 pour former un obstacle éventuel au véhicule, et non vers la voie piétonne 38 réduisant le risque de blesser des piétons circulant sur cette voie.

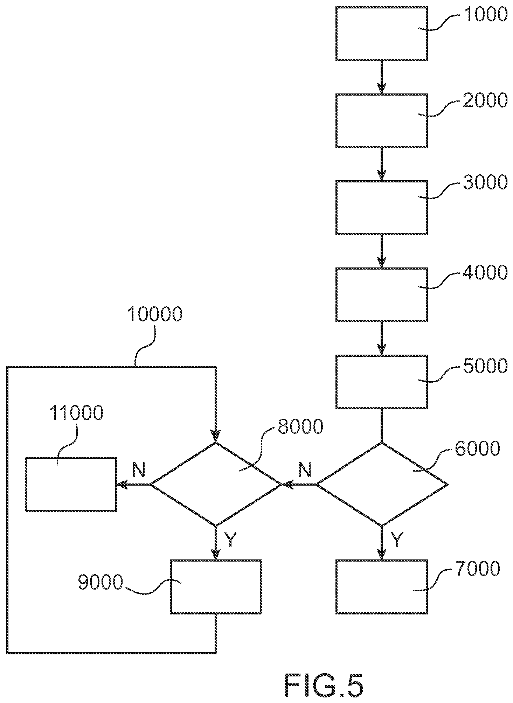

Un autre exemple de mise en œuvre du système de sécurisation selon l'invention va maintenant être expliqué à l'aide de l'organigramme de la figure 5.

Le conducteur a stationné son véhicule sur la zone Z, par exemple en utilisant l'assistance au stationnement. Par exemple, la zone Z est en pente.

Lors d'une première étape 1000, le conducteur ou le véhicule active la fonction frein de parking, en tirant le levier de frein ou en appuyant sur un bouton ou en actionnant tout autre moyen. Les freins des roues de l'essieu arrière sont serrés assurant une immobilisation du véhicule. Les roues directrices sont typiquement parallèles à l'axe X (figure 2A).

A l'étape 2000, l'unité de commande UC détecte l'activation de la fonction de frein de parking, par exemple au moyen d'un capteur sur le levier de frein et déclenche alors le processus de détermination de l'environnement. L'unité de commande « sait » que le véhicule est stationné de manière prolongée. L'unité de commande UC peut également ou alternativement détecter si le contact a été coupé et/ou si les portes ont été verrouillées et/ou si le conducteur n'est plus sur son siège au moyen des capteurs de présence équipant généralement au moins le siège conducteur.

Lors d'une étape 3000, de préférence elle détermine si la zone Z est en pente et éventuellement la valeur de la pente de la zone Z au moyen d'un capteur de pente ou inclinomètre et avantageusement l'orientation du véhicule par rapport à la pente. Par exemple, si l'axe du véhicule est aligné avec la pente elle détermine si, en cas de relâchement de freins, le véhicule va reculer ou avancer. L'unité de commande a ainsi avantageusement déterminé de quel côté du véhicule des éléments susceptibles de former un obstacle au véhicule sont à détecter. La détermination de la pente a lieu lorsque le véhicule est arrêté ou avant qu'il s'arrête.

Lors d'une étape 4000, l'unité de commande active les différents moyens énoncés ci-dessus, tels que le ou les radars, le ou les sonars, le ou les caméras de recul afin de recueillir des informations sur les éléments composants la zone. De préférence, ce sont uniquement les moyens situés sur le véhicule du côté où un obstacle est recherché, i.e. du côté aval du véhicule. En sélectionnant ainsi les capteurs, la consommation électrique pour cette étape est réduite. En variante, l'acquisition s'effectue lors du stationnement du véhicule.

Lors d'une étape 5000, les données acquises par les différents moyens d'acquisition sont transmises au calculateur qui traite des données et les met en relation pour d'une part déterminer la nature des éléments et leur emplacement par rapport au véhicule et ainsi obtenir une connaissance de l'environnement du véhicule.

Lors d'une étape 6000, le calculateur sélectionne parmi les différents éléments de l'environnement, le ou les éventuels éléments fixes capables de former un obstacle sûr pour le véhicule. Pour cela il peut appliquer un ou plusieurs filtres Fi, tels que décrits ci-dessus, par exemple en appliquant des conditions de proximité, de solidité, de dangerosité... Si à la fin de cette étape, un élément fixe est identifié comme capable de former un obstacle pour le véhicule si les freins venaient à se desserrer. La valeur de la pente et le type de véhicule, par exemple sa masse, peuvent être pris en compte pour la sélection de l'élément.

Peuvent être considérés comme des obstacles fixes sûrs, par exemple un poteau, un trottoir suffisamment haut. Ne sont pas considérés comme pouvant former des obstacles fixes sûrs, par exemple un marquage sur le sol, une ombre, un buisson, une personne située autour de la zone de stationnement, un obstacle mobile tel qu'une barrière mobile ou une voiture.

Si un obstacle fixe sûr a été identifié à l'étape 6000, lors d'une étape 7000, l'unité de commande envoie une instruction à un actionneur électrique d'orienter les roues directrices, par exemple en tournant le volant, de sorte que, si les freins sont relâchés, la course du véhicule est telle que le véhicule se dirige vers l'élément déterminé comme obstacle sûr. Ainsi, en cas d'action insuffisante des freins, le véhicule est arrêté rapidement et la sécurité de ses éventuels occupants et de toute personne autour du véhicule, par exemple des piétons et des automobilistes est assurée.

Par exemple, si l'élément choisi comme obstacle sûr est une bordure de trottoir longeant le côté gauche du véhicule en regardant vers l'avant du véhicule, les roues directrices sont tournées d'un certain angle θ dans le sens antihoraire (figure 2B).

Si l'élément choisi comme obstacle sûr est un mur situé en aval du véhicule, les roues directrices ne sont pas tournées.

Si aucun obstacle fixe sûr n'a été identifié, à l'étape 8000 l'unité de commande analyse les obstacles sûrs qui sont susceptibles d'être déplacés, par exemple un véhicule à l'arrêt. Si un tel obstacle sûr est identifié, les roues sont orientées de sorte qu'en cas de relâchement des freins, le véhicule se dirige vers cet obstacle (étape 9000). De manière très avantageuse, une surveillance 10000 de la persistance de cet obstacle est faite, par exemple en réactivant périodiquement les différents systèmes pour analyser la situation et modifier si nécessaire l'orientation des roues, par exemple si le véhicule qui avait été considéré comme un obstacle sûr est parti.

Si aucun obstacle sûr n'a été identifié ou si l'obstacle sûr n'est plus présent, alors l'unité de commande envoie une instruction pour orienter les roues de sorte à réduire le niveau de freinage requis (étape 11000), par exemple en tournant à fond les roues.

De manière très avantageuse, les instructions données par l'unité de commande prennent en compte la législation du lieu du stationnement, par exemple une obligation d'orienter ses roues vers l'extérieur de la chaussée dans certains pays ou Etats. De préférence l'unité de commande favorise au minimum l'orientation des roues qui est en accord avec la législation.

La base de données législatives est avantageusement couplée au GPS pour détecter l'endroit (pays ou Etat) où se trouver le véhicule afin de déterminer la législation applicable.

Les étapes 3000 et 4000 peuvent être interverties. En réalisant l'étape 3000 avant l'étape 4000 l'unité de commande peut décider de ne pas exécuter les autres étapes si le véhicule est sur de plat ou sur une zone de pente très faible, ou alors directement appliquer l'étape 11000. En outre, en déterminant l'orientation du véhicule par rapport à la pente, la quantité de données à acquérir et à traiter peut être réduite.

Les étapes 5000 et 6000 peuvent être réalisées simultanément ou successivement. Par exemple, à chaque identification d'un élément le calculateur classe celui-ci soit comme obstacle potentiel, soit comme élément non capable de former un obstacle. Selon un autre exemple, le calculateur identifie tous les éléments : bordure de trottoir, arbres, plots...et ensuite trie les éléments suivant qu'ils sont ou non capables de former un obstacle.

Dans le cas où c'est l'étape 11000 (orientation des roues pour réduire le niveau de freinage requis) qui est appliqué, il est envisageable de faire une surveillance de l'environnement pour détecter si un obstacle sûr est mis en place, par exemple un véhicule venant se stationner en aval du véhicule dans le sens de la pente. Dans le cas où un tel obstacle sûr apparaît l'orientation des roues peut être modifiée. Il sera compris que l'invention s'applique également à des véhicules comportant deux essieux capables de diriger le véhicule et/ou plus de deux essieux, les modifications d'orientation s'appliquant à un ou plusieurs essieux.

Dans les exemples ci-dessus, il a été décrit l'activation du frein de parking avant la sécurisation du véhicule. Selon un autre exemple, cette activation peut ne pas avoir lieu par exemple car le véhicule est sur zone de stationnement horizontale et que le conducteur n'a pas estimé nécessaire de l'activer. Le système de sécurisation peut néanmoins être activé à titre de précaution. Par exemple, avant de sécuriser le véhicule, le système peut comparer plusieurs informations pour décider ou non si le véhicule est stationné. Par exemple, si le système détecte que le contact a été coupé et/ou que les portes ont été verrouillées et/ou que le conducteur n'est plus sur son siège, mais que néanmoins le frein de parking n'a pas été activé, il peut décider que le véhicule est dans un état stationné et entamer la procédure de sécurisation.

Le système de sécurisation peut être désactivé par le conducteur, afin qu'il puisse orienter les roues du véhicule dans la direction qu'il considère la plus sûre, et qui pourrait être différente que celle qui aurait été déterminée par le système de sécurisation.
2 - véhicule automobile
4 - chaussée en pente
6 - essieu avant
8 - essieu arrière
10 - roues avant
12 - roues arrière
14 - volant de direction
16 - moteur électrique
18 - moyens de détermination de la direction et du sens de la pente
20 - moyens de détermination de la configuration de la zone de stationnement
22 - capteurs de détection et/ou visualisation
28 - bordure de trottoir
30 - barrière
32 - arbre
34 - véhicule
36 - voie de circulation automobile
37 - voie de non circulation automobile
38 - voie piétonne
40 - bordure centrale
F - sens de la pente
S - système de sécurisation
X - axe du véhicule automobile
Z - zone de stationnement
UC - unité de commande

## Revendications

1. Système de sécurisation du stationnement d'un véhicule automobile stationné sur une zone de stationnement (Z), ledit véhicule s'étendant selon un axe, le véhicule comportant au moins un essieu (6) assurant la direction du véhicule automobile, les roues équipant ledit essieu étant désignées « roues directrices », et des moyens de modification de l'orientation des roues directrices sans l'action du conducteur, le système comportant
une unité de commande (UC),
des moyens de détection d'un état stationné du véhicule automobile,
des moyens (18) de détection de la pente de la zone de stationnement,
des moyens de détermination de l'orientation des roues directrices par rapport à l'axe du véhicule,
des moyens (20) pour déterminer la configuration des éléments composant la zone de stationnement, des moyens de tri pour exclure les éléments non capables de former un obstacle sûr pour le véhicule, un obstacle sûr étant un obstacle capable d'arrêter le véhicule, et des moyens pour sélectionner parmi lesdits éléments restants au moins un élément capable de former un obstacle sûr pour le véhicule,
l'unité de commande (UC) comportant des moyens pour déterminer une orientation des roues directrices pour réduire le niveau de freinage requis et/ou pour placer le véhicule dans une configuration de danger réduit en cas de déplacement non voulu du véhicule, et pour envoyer une instruction aux moyens de modification de l'orientation des roues directrices sans l'action du conducteur, d'orienter les roues directrices suivant l'orientation déterminée par l'unité de commande (UC),
dans lequel l'unité de commande est configurée pour orienter les roues directrices, de sorte que la trajectoire du véhicule en aval de celui ci croise ledit élément sélectionné comme un obstacle sûr,
**caractérisé en ce que** les moyens de tri sont configurés pour exclure les éléments non capables de former un obstacle fixe sûr pour le véhicule, et les moyens de tri sont configurés pour sélectionner parmi les éléments non exclu au moins un élément capable de former un obstacle fixe sûr pour le véhicule.

2. Système de sécurisation selon la revendication 1, dans lequel les moyens pour déterminer la configuration des éléments composant la zone de stationnement comportent au moins un capteur de détection d'objet et/ou des caméras.

3. Système de sécurisation selon la revendication 2, dans lequel le ou les capteurs de détection d'objet comportent un radar et/ou un sonar.

4. Système de sécurisation selon les revendications 2 ou 3, dans lequel l'unité de commande comporte un calculateur appliquant un logiciel de reconnaissance de forme aux images fournies par la ou les caméras.

5. Système de sécurisation selon la revendication 4, dans lequel le logiciel de reconnaissance de forme utilise une logique floue pour déterminer une configuration d'éléments composant la zone de stationnement.

6. Système de sécurisation selon l'une des revendications 1 à 5, dans lequel les moyens de détection d'un état stationné du véhicule automobile comportent des moyens de détection de l'activation d'un frein de parking et dans lequel le déplacement non voulu du véhicule correspond à un niveau de freinage insuffisant.

7. Système de sécurisation selon l'une des revendications 1 à 6, dans lequel le moyen de tri pour exclure les éléments non capables de former un obstacle sûr pour le véhicule est configuré pour filtrer les éléments sur au moins un parmi une taille de l'élément, une distance de l'élément au véhicule, et/ou une pérennité de l'élément .

8. Système de sécurisation selon l'une des revendications 1 à 7, dans lequel en cas d'absence de sélection d'un obstacle fixe sûr par les moyens de tri, les moyens de tri sont configurés pour exclure les éléments non capables de former un obstacle non fixe sûr pour le véhicule et les moyens de sélection sont configurés pour sélectionner parmi lesdits éléments restants non exclus par les moyens de tri au moins un élément capable de former un obstacle non fixe sûr pour le véhicule, dans lequel l'obstacle non fixe sûr est capable de se déplacer relativement au véhicule lorsque le véhicule est à l'arrêt.

9. Système de sécurisation selon l'une des revendications 1 à 8, dans lequel les moyens de détermination des éléments composants la zone de stationnement sont configurés pour surveiller la persistance de l'obstance non fixe sûr

10. Véhicule automobile comportant au moins un essieu (6) assurant l'orientation du véhicule, des moyens (16) de modification de l'orientation des roues directrices sans l'action du conducteur et un système de sécurisation selon l'une des revendications 1 à 9.

11. Procédé de sécurisation d'un véhicule stationné sur une zone de stationnement, ledit véhicule comportant au moins un essieu assurant l'orientation du véhicule, des moyens de modification de l'orientation des roues directrices sans l'action du conducteur, le procédé comportant les étapes :
a) détection (200, 2000) de l'état stationné du véhicule,
b) détection (300, 3000) de la pente de la zone de stationnement,
c) détermination (400, 500, 4000, 5000) de la configuration des éléments composant la zone de stationnement,
d) tri (600, 6000) parmi les éléments composant la zone de stationnement pour exclure les éléments non capables de former un obstacle sûr pour le véhicule, un obstacle sûr étant un obstacle capable d'arrêter le véhicule,
e) sélection (600, 6000) parmi lesdits éléments restants d.au moins un élément capable de former un obstacle pour le véhicule,
f) détermination de l'orientation des roues directrices assurant la diminution du niveau de freinage requis et/ou assurant que la trajectoire du véhicule en aval de celui ci croise ledit élément sélectionné comme obstacle,
g) génération (700, 7000) d'une instruction aux moyens de modification de l'orientation des roues directrices sans l'action du conducteur, d'orienter les roues directrices suivant l'orientation déterminée à l'étape f).

12. Procédé de sécurisation selon la revendication 11, dans lequel l'étape f) compare l'angle formé entre la pente et l'orientation des roues directrices et détermine l'angle de déplacement requis pour atteindre un angle maximal entre la pente et l'orientation des roues directrices.

13. Procédé de sécurisation selon la revendication 11 ou 12, dans lequel, la zone de stationnement étant bordé d'un côté par une voie de circulation automobile et d'un côté d'un zone de non circulation automobile, si lors de l'étape e) aucun élément n'est sélectionné, lors de l'étape f) une instruction est générée aux moyens de modification de l'orientation des roues directrices sans l'action du conducteur, d'orienter les roues directrices de sorte que la trajectoire du véhicule en aval de celui ci soit orientée vers la voie de non circulation automobile.

14. Procédé de sécurisation selon l'une des revendications 11 à 13, comportant la détermination de l'orientation dudit véhicule par rapport à la pente et, lors l'étape c) de détermination des éléments de la zone de stationnement uniquement en aval du véhicule.

15. Procédé de sécurisation selon l'une des revendications 11 à 14, dans lequel lors de l'étape a), l'activation du frein de parking est détectée.

## Patentansprüche

1. System zum Sichern des Parkens eines in einer Parkzone (Z) geparkten Kraftfahrzeugs, wobei sich das Fahrzeug entlang einer Achse erstreckt, wobei das Fahrzeug mindestens eine Achse (6), die für das Lenken des Kraftfahrzeugs sorgt, wobei die Räder, welche die Achse ausrüsten, als "gelenkte Räder" bezeichnet werden, und Mittel zum Ändern der Ausrichtung der gelenkten Räder ohne Handlung des Lenkers beinhaltet, wobei das System beinhaltet
eine Steuereinheit (UC),
Mittel zur Erkennung eines geparkten Zustands des Kraftfahrzeugs,
Mittel (18) zur Erkennung der Neigung der Parkzone,
Mittel zur Bestimmung der Ausrichtung der Lenkräder in Bezug auf die Fahrzeugachse,
Mittel (20), um die Konfiguration der Elemente, aus denen die Parkzone besteht, zu bestimmen, Sortiermittel, um Elemente auszuschließen, die nicht in der Lage sind, ein sicheres Hindernis für das Fahrzeug zu bilden, wobei ein sicheres Hindernis ein Hindernis ist, das imstande ist, das Fahrzeug anzuhalten, und Mittel, um aus den verbleibenden Elementen mindestens ein Element auszuwählen, das imstande ist, ein sicheres Hindernis für das Fahrzeug zu bilden,
wobei die Steuereinheit (UC), die Mittel beinhaltet, um eine Ausrichtung der gelenkten Räder zu bestimmen, um die erforderliche Bremsstufe zu reduzieren und/oder das Fahrzeug bei unbeabsichtigter Bewegung des Fahrzeugs in eine Konfiguration mit verringerter Gefahr zu bringen, und um eine Anweisung an die Mittel zum Ändern der Ausrichtung der gelenkten Räder ohne Handlung des Lenkers zu senden, um die gelenkten Räder gemäß der von der Steuereinheit (UC) bestimmten Ausrichtung auszurichten,
wobei die Steuereinheit konfiguriert ist,um die gelenkten Räder auszurichten, sodass der Weg des Fahrzeugs stromabwärts desselben das als sicheres Hindernis ausgewählte Element kreuzt,
**dadurch gekennzeichnet, dass**
die Sortiermittel konfiguriert sind, um Elemente ausschließen, die nicht imstande sind, ein sicheres festes Hindernis für das Fahrzeug zu bilden, und die Sortiermittel konfiguriert sind, um aus den nicht ausgeschlossenen Elementen mindestens ein Element auszuwählen, das imstande ist, ein sicheres festes Hindernis für das Fahrzeug zu bilden.

2. System zum Sichern nach Anspruch 1, wobei die Mittel, um die Konfiguration der Elemente, aus denen die Parkzone besteht, zu bestimmen, mindestens einen Objekterkennungssensor und/oder Kameras beinhalten.

3. System zum Sichern nach Anspruch 2, wobei der oder die Objekterkennungssensor(en) ein Radar und/oder ein Sonar beinhaltet/beinhalten.

4. System zum Sichern nach Anspruch 2 oder 3, wobei die Steuereinheit einen Rechner beinhaltet, der Formerkennungssoftware auf die von der oder den Kamera(s) bereitgestellten Bilder anwendet.

5. System zum Sichern nach Anspruch 4, wobei die Formerkennungssoftware eine unscharfe Logik verwendet, um eine Konfiguration von Elementen zu bestimmen, aus denen die Parkzone besteht.

6. System zum Sichern nach einem der Ansprüche 1 bis 5, wobei die Mittel zur Erkennung eines geparkten Zustands des Kraftfahrzeugs Mittel zur Erkennung der Aktivierung einer Feststellbremse beinhalten und wobei die unbeabsichtigte Bewegung des Fahrzeugs einem unzureichenden Bremsniveau entspricht.

7. System zum Sichern nach einem der Ansprüche 1 bis 6, wobei das Sortiermittel, um Elemente auszuschließen, die nicht imstande sind, ein sicheres Hindernis für das Fahrzeug zu bilden, konfiguriert ist, um die Elemente nach mindestens einer von einer Größe des Elements, einem Abstand des Elements zum Fahrzeug und/oder eines Fortbestands des Elements zu filtern.

8. System zum Sichern nach einem der Ansprüche 1 bis 7, wobei bei Abwesenheit einer Auswahl eines sicheren festen Hindernisses durch die Sortiermittel die Sortiermittel konfiguriert sind, um die Elemente auszuschließen, die nicht imstande sind, ein sicheres nicht festes Hindernis für das Fahrzeug zu bilden, und die Auswahlmittel konfiguriert sind, um aus den verbleibenden von den Sortiermitteln nicht ausgeschlossenen Elementen mindestens ein Element auszuwählen, das imstande ist, ein sicheres nicht festes Hindernis für das Fahrzeug zu bilden, wobei das sichere nicht feste Hindernis imstande ist, sich, wenn das Fahrzeug im Stillstand ist, in Bezug zum Fahrzeug zu bewegen.

9. System zum Sichern nach einem der Ansprüche 1 bis 8, wobei die Mittel zur Bestimmung der Element, aus denen die Parkzone besteht, konfiguriert sind, um das Fortbestehen des sicheren nicht festen Gegenstands zu überwachen

10. Kraftfahrzeug, das mindestens eine Achse (6), die für die Ausrichtung des Fahrzeugs sorgt, Mittel (16) zur Änderung der Ausrichtung der gelenkten Räder ohne Handlung des Lenkers und ein System zum Sichern nach einem der Ansprüche 1 bis 9 beinhaltet.

11. Verfahren zum Sichern eines in einer Parkzone geparkten Fahrzeugs, wobei das Fahrzeug mindestens eine Achse, die für die Ausrichtung des Fahrzeugs sorgt, Mittel zur Änderung der Ausrichtung der gelenkten Räder ohne Handlung des Lenkers beinhaltet, wobei das Verfahren die Schritte beinhaltet:
a) Erkennung (200, 2000) des geparkten Zustands des Fahrzeugs,
b) Erkennung (300, 3000) der Neigung der Parkzone,
c) Bestimmung (400, 500, 4000, 5000) der Konfiguration der Elemente, aus denen die Parkzone besteht,
d) Sortierung (600, 6000) unter den Elementen, aus denen die Parkzone besteht, um die Elemente auszuschließen, die nicht imstande sind, ein sicheres Hindernis für das Fahrzeug zu bilden, wobei ein sicheres Hindernis ein Hindernis ist, das imstande ist, das Fahrzeug anzuhalten,
e) Auswahl (600, 6000) aus den verbleibenden Elementen mindestens eines Elements, das imstande ist, ein Hindernis für das Fahrzeug zu bilden,
f) Bestimmung der Ausrichtung der gelenkten Räder, um die erforderliche Bremsstufe zu reduzieren und/oder dafür zu sorgen, dass der Weg des Fahrzeugs stromabwärts desselben das als Hindernis ausgewählte Element kreuzt,
g) Erzeugung (700, 7000) einer Anweisung an die Mittel zur Änderung der Ausrichtung der gelenkten Räder ohne Handlung des Lenkers, um die gelenkten Räder gemäß der in Schritt f) bestimmten Ausrichtung auszurichten.

12. Verfahren zum Sichern nach Anspruch 11, wobei der Schritt f) den gebildeten Winkel zwischen der Neigung und der Ausrichtung der gelenkten Räder vergleicht und den erforderlichen Verschiebewinkel bestimmt, um einen maximalen Winkel zwischen der Neigung und der Ausrichtung der gelenkten Räder zu erreichen.

13. Verfahren zum Sichern nach Anspruch 11 oder 12, wobei, da die Parkzone auf einer Seite durch eine Autofahrbahn und auf einer Seite durch eine Nicht-Auto-Verkehrszone begrenzt ist, wenn in Schritt e) kein Element ausgewählt ist, in Schritt f) eine Anweisung an die Mittel zur Änderung der Ausrichtung der gelenkten Räder ohne Handlung des Lenkers erzeugt wird, die gelenkten Räder auszurichten, sodass der Fahrweg des Fahrzeugs stromabwärts desselben in Richtung der Nicht-Autofahrbahn ausgerichtet ist.

14. Verfahren zum Sichern nach einem der Ansprüche 11 bis 13, das die Bestimmung der Ausrichtung des Fahrzeugs in Bezug auf die Neigung und beim Schritt c) die Bestimmung der Elemente der Parkzone nur stromabwärts des Fahrzeugs beinhaltet.

15. Verfahren zum Sichern nach einem der Ansprüche 11 bis 14, wobei beim Schritt a) die Aktivierung der Feststellbremse erkannt wird.

## Claims

1. A system for securing the parking of an automobile vehicle parked on a parking area (Z), said vehicle extending along an axis, the vehicle including at least one axle (6) ensuring the steering of the automobile vehicle, the wheels equipping said axle being designated as "steering wheels", and means for modifying the orientation of the steering wheels without the action of the driver, the system including
- a control unit (UC),
- means for detecting a parked state of the automobile vehicle,
- means (18) for detecting the slope of the parking area,
- means for determining the orientation of the steering wheels with respect to the axis of the vehicle,
- means (20) for determining the configuration of elements constituting the parking area, sorting means for excluding elements not capable of forming a safe obstacle for the vehicle and means for selecting from said remaining elements, at least one element capable of forming a safe obstacle for the vehicle,
- the control unit (UC) including means for determining an orientation of the steering wheels to reduce the required braking level and/or placing the vehicle in a decreased danger configuration in case of an unwanted movement of the vehicle, and to sending an instruction to the means for modifying the orientation of the steering wheels without the action of the driver, to orient the steering wheels according to the orientation determined by the control unit (UC),
wherein the control unit is configured to orient the steering wheels, such that the trajectory of the vehicle downstream of the same intersects said element selected as a safe obstacle,
**characterized in that** the sorting means are configured for excluding the elements not capable of forming a fixed safe obstacle for the vehicle, and the sorting means are configured for selecting among the non-excluded elements at least one element capable of forming a fixed safe obstacle for the vehicle.

2. The securing system according to claim 1, wherein the means for determining the configuration of the elements constituting the parking area include at least one object detecting sensor and/or cameras.

3. The securing system according to claim 2, wherein the object detecting sensor(s) include(s) a radar and/or a sonar.

4. The securing system according to claims 2 or 3, wherein the control unit includes a calculator applying a pattern recognition software to the images provided by the camera(s).

5. The securing system according to claim 4, wherein the pattern recognition software uses a fuzzy logic for determining a configuration of elements composing the parking area.

6. The securing system according to one of claims 1 to 5, wherein the means for detecting a parked state of the automobile vehicle include means for detecting the activation of a parking brake and wherein the unwanted movement of the vehicle corresponds to an insufficient braking level.

7. The securing system according to one of claims 1 to 6, wherein the sorting means configured for excluding the elements not capable of forming a safe obstacle for the vehicle is configured for filtering the elements based on at least one among a size of the element, a distance of the element from the vehicle, and/or a durability of the element.

8. The securing system according to one of claims 1 to 7, wherein in case no fixed safe obstacle has been selected by the sorting means, the sorting means are configured for excluding the elements not capable of forming a safe non-fixed obstacle for the vehicle and the selecting means are configured for selecting among the said remaining elements not excluded by the sorting means at least one element capable of forming a safe non-fixed obstacle for the vehicle, wherein the safe non-fixed obstacle is capable of moving with respect to the vehicle when the vehicle is stopped.

9. The securing system according to one of claims 1 to 8, wherein the means for determining the configuration of the elements constituting the parking area are configured for monitoring the persistence of the safe non-fixed obstacle.

10. An automobile vehicle including at least one axle (6) ensuring the orientation of the vehicle, means (16) for modifying the orientation of the steering wheels without the action of the driver and a securing system according to one of claims 1 to 9.

11. A method for securing a vehicle parked in a parking area, said vehicle including at least one axle ensuring the orientation of the vehicle, means for modifying the orientation of the steering wheels without the action of the driver, the method including the steps of:
a) detecting (200, 2000) the parked state of the vehicle,
b) detecting (300, 3000) the slope of the parking area,
c) determining (400, 500, 4000, 5000) the configuration of elements constituting the parking area,
d) sorting (600, 6000) from the elements constituting the parking area to exclude elements not capable of forming a safe obstacle for the vehicle,
e) selecting (600, 6000) from said remaining elements, at least one element capable of forming an obstacle for the vehicle,
f) determining the orientation of the steering wheels ensuring the decrease of the required braking level and/or ensuring that the trajectory of the vehicle downstream of the same intersects said element selected as an obstacle,
g) generating (700, 7000) an instruction to the means for modifying the orientation of the steering wheels without the action of the driver, to orient the steering wheels according to the orientation determined in step f).

12. The securing method according to claim 11, wherein step f) compares the angle formed between the slope and the orientation of the steering wheels and determines the movement angle required to reach a maximum angle between the slope and the orientation of the steering wheels.

13. The securing method according to claim 11 or 12, wherein, the parking area being bordered on one side by a traffic lane and on another side by a traffic-free area, if during step e) no element is selected, during step f) an instruction is generated to the means for modifying the orientation of the steering wheels without the action of the driver, to orient the steering wheels such that the trajectory of the vehicle downstream of the same is oriented to the traffic-free lane.

14. The securing method according to one of claims 11 to 13, including determining the orientation of said vehicle with respect to the slope and, during step c) of determining the elements of the parking area only downstream of the vehicle.

15. The securing method according to one of claims 11 to 14, wherein during step a), the activation of the parking brake is detected.
